# EUROPÄISCHE PATENTSCHRIFT

(11) **EP 0 640 196 B1**
(45) Veröffentlichungstag und Bekanntmachung des Hinweises auf die Patenterteilung: **09.04.1997**
(21) Anmeldenummer: 93909924.8
(22) Anmeldetag: 09.05.1993
(51) Int. Cl.: F16N 29/02, F16N 13/04

(54) **Vorrichtung und Verfahren zum dosierten Zuführen von flüssigen oder viskosen Substanzen an eine Verbrauchsstelle**
Device and method for supplying doses of liquid or viscous substances to a point of consumption
Dispositif et procédé d'amenée de doses de substances liquides ou visqueuses au point de consommation

(30) Priorität: 10.05.1992 DE 4214827
(43) Veröffentlichungstag der Anmeldung: 01.03.1995
(73) Patentinhaber: DAMME, Eric van, B-1420 Braine L'Alleud (BE)
(72) Erfinder: DAMME, Eric van, B-1420 Braine L'Alleud (BE)
(74) Vertreter: Wallinger, Michael, Dr.-Ing.
(86) Internationale Anmeldenummer: EP9301131
(87) Internationale Veröffentlichungsnummer: WO9323698

(56) Entgegenhaltungen:
- DE-A- 2 546 704
- GB-A- 668 363
- GB-A- 845 933
- US-A- 2 856 024
- US-A- 3 187 673
- US-A- 3 603 432

## Beschreibung

Die vorliegende Erfindung betrifft eine Vorrichtung und ein Verfahren zum dosierten Zuführen von flüssigen oder viskosen Substanzen an eine Verbrauchsstelle und insbesondere eine Vorrichtung, welche sich dazu eignet, flüssige oder viskose Schmierstoffe einer Schmierstelle zuzuführen.

Die der Erfindung zugrundeliegende Aufgabe und ihre Lösung werden nachfolgend beispielhaft in bezug auf die Verwendung der Vorrichtung für die Zufuhr von Schmierfetten zu einer Schmierstelle beschrieben. Die erfindungsgemäße Vorrichtung eignet sich aber gleichermaßen dazu, auch flüssige Stoffe einer Schmierstelle zuzuführen und eignet sich auch zur dosierten Zuführung von flüssigen oder viskosen Stoffen zu anderen Zwecken als zu Schmierzwecken.

Die regelmäßige Zufuhr von Schmierstoffen zu den Schmierstellen von Maschinen und maschinellen Anlagen ist eine wichtige Voraussetzung für deren betriebssichere und verschleißarme Funktion. Ein Ausfall der Schmierung kann zur Zerstörung von Maschinen und damit auch zu erheblichen Produktionsausfällen führen.

Größere Maschinen und Anlagen haben häufig eine Vielzahl von Schmierstellen, die nach vorgegebenen Schmierplänen mit Schmierfett oder Schmieröl versorgt werden müssen. Dies geschieht bei vielen Anlagen auch heute noch manuell, d.h. durch Bedienungskräfte, was einerseits kostenintensiv und andererseits, wie die Erfahrung zeigt, nicht sehr zuverlässig ist. Es gibt deshalb zahlreiche Überlegungen, die Schmiermittelzufuhr zu automatisieren.

Ein möglicher Weg zur Lösung dieses Problems ist die Verwendung einer zentralen Schmieranlage, die alle Schmierstellen der Maschine mit Schmiermittel versorgt. Die Verwendung einer zentralen Schmieranlage bedeutet aber schon bei der Konstruktion der Maschine erhebliche Einschränkungen, da in der Regel an allen Schmierstellen nur ein einheitliches Schmiermittel zur Verfügung steht. Die einzelnen Schmierstellen können somit konstruktiv nicht optimal ausgelegt werden. Zentrale Schmieranlagen bedingen weiterhin hohe Investitionskosten und sind wegen ihres komplizierten Aufbaus nicht immer ausreichend zuverlässig.

Aus diesem Grund sind zahlreiche Vorrichtungen entwickelt worden, mit denen jeder einzelnen Schmierstelle einer Maschine automatisch das benötigte Schmiermittel zugeführt wird. Damit ist es z.B. möglich, unterschiedliche Schmierstellen an der gleichen Maschine mit unterschiedlichen Schmiermittel zu versorgen.

Eine dieser bekannten Einzel-Schmiervorrichtungen verwendet einen Hohlraum, beispielsweise einen Zylinder, in dem ein Schmierfett gespeichert ist, welches langsam mittels eines federbelasteten Scheibenkolbens durch eine Drosselöffnung ausgebracht wird. Diese bekannte Vorrichtung hat aber eine ganze Reihe von Nachteilen.

Insbesondere bei Schmierstoffen, die auf Mineralölbasis hergestellt sind, wie z.B. die meisten Schmierfette, ändert sich die Viskosität mit der Temperatur (und in geringem Maße auch mit dem Druck). Bei höherer Temperatur ist die Viskosität und damit der Drosselwiderstand geringer und es wird somit mehr Schmiermittel in dem gleichen Zeitraum zugeführt, als bei niedrigeren Temperaturen. Diese Temperaturabhängigkeit kann bei höheren Temperaturen zu einer frühzeitigen Entleerung der Vorrichtung führen, und bei niedrigen Temperaturen und damit hoher Viskosität auch zu einer Unterbrechung der Schmierstoffzufuhr. In beiden Fällen wird die Schmierstelle dann nicht mehr ausreichend mit Schmierstoff versorgt.

Von weiterem Nachteil ist, daß das Schmiermittel während der gesamten Entnahmezeit, die unter Umständen mehrere Monate betragen kann, unter dem Druck der Feder steht. Bei vielen Schmiermitteln führt eine solche Dauerbelastung zu einer Entmischung der Bestandteile des Schmiermittels, und insbesondere des im Schmierfett gebundenen Öls, was die Schmierung erheblich beeinträchtigen kann.

Ein weiterer Nachteil ist die Abhängigkeit der Schmierstoffzufuhr von der Charakteristik der verwendeten Feder. Da die verwendeten Schraubenfedern üblicherweise eine angenäherte lineare Charakteristik haben, nimmt die von der Feder ausgeübte Kraft mit deren zunehmenden Ausdehnung ab, wodurch der auf das Schmiermittel wirkende Druck verringert wird. Damit wird aber auch die Menge des pro Zeiteinheit zugeführten Schmiermittels verringert.

Weiterhin besteht der Nachteil, daß die abgegebene Schmiermittelmenge nicht nur von der Wechselwirkung zwischen Federkraft, Viskosität und Drosselwiderstand abhängt, sondern auch vom Strömungswiderstand des Schmiermittels innerhalb der Maschine bis zur eigentlichen Verbrauchsstelle, was die Auswahl der korrekten Federsteifigkeit sehr erschwert.

Zur Lösung der mit dieser bekannten Einzel-Schmiervorrichtung verbundenen Probleme wird in der WO88/09899 und WO88/09900 eine Schmiervorrichtung vorgeschlagen, welche eine Kammer zur Aufnahme des Schmierfettes aufweist, die durch einen verschieblichen Trenneinsatz von einer zweiten Kammer getrennt ist, in welcher ein gaserzeugendes Element, z.B. eine aus Elektrolyt, Anode und Kathode bestehende Zelle angeordnet ist. Durch den Gasdruck wird das Fett über einen Drosselwiderstand der Schmierstelle zugeführt.

Bei dieser bekannten Vorrichtung wird der negative Einfluß der Federcharakteristik einer Belastungsfeder auf die Menge des geförderten Schmiermittels eliminiert. Die Vorrichtung weist aber immer noch den Nachteil auf, daß die Menge des geförderten Schmiermittels von der Temperatur abhängt. Weiterhin besteht auch hier die Gefahr der Entmischung des Schmiermittels durch die ständige Druckbelastung.

Ein weiterer wesentlicher Nachteil der bekannten Einzelschmiervorrichtungen ist das Problem der Zuordnung der Förderung des Schmiermittels zur jeweiligen Schmierstelle. Da die einzelnen Schmierstellen oft unterschiedliche Mengenanforderungen für das Schmiermittel haben, ist es erforderlich, eine entsprechende Anzahl von Einzelschmiervorrichtungen vorzusehen. Dieses erschwert nicht nur die Lagerhaltung für derartige Schmiervorrichtungen, sondern es besteht auch die Gefahr, daß die einzelnen Schmiervorrichtungen verwechselt werden, wodurch eine Über- oder was schlimmer ist, eine Unterversorgung der jeweiligen Schmierstelle mit dem Schmiermittel erfolgt.

Die US-A-2,856,924, welche zur Bildung des Oberbegriffes des Anspruches 1 herangezogen wurde, zeigt eine Pumpe zum Zuführen von flüssigem Schmierstoff an mehrere Verbrauchsstellen, wobei die Zufuhr über Drosseln erfolgt. Die Pumpe arbeitet mit einem in einem Zylinder verschieblich angeordneten Kolben, dessen Hub über ein mit einem Gewinde versehenen Einstellelement eingestellt werden kann.

Der vorliegenden Erfindung liegt die Aufgabe zugrunde, eine Vorrichtung und ein Verfahren zum dosierten Zuführen von flüssigen und viskosen Substanzen zu schaffen, welche eine genaue Dosierung ermöglicht, die auf einfache Weise an die Erfordernisse der jeweiligen Verbrauchsstelle angepaßt werden kann, und bei der eine einmal gewählte Dosierung nicht versehentlich geändert werden kann.

Diese Aufgabe wird erfindungsgemäß durch eine Vorrichtung gemäß Anspruch 1 gelöst.

Das erfindungsgemäße Verfahren ist Gegenstand des Anspruches 18.

Zu bevorzugende Weiterbildungen der Erfindung sind Gegenstand der Unteransprüche.

Die erfindungsgemäße Vorrichtung weist eine Fördereinrichtung auf, durch die die in einer Vorratskammer befindliche, zu fördernde Substanz durch eine Austrittsöffnung einer Verbrauchsstelle zugeführt werden kann. Die Fördereinrichtung weist vorzugsweise einen Energiespeicher auf, welcher durch eine Bewegungseinrichtung gegen eine elastische Rückstellkraft von einer ersten Position mit geringerer Rückstellkraft in eine zweite Position mit höherer Rückstellkraft bewegt werden kann. Die Rückstellkraft ist so hoch, daß durch diese Rückstellkraft das Fördern der Substanz durch die Fördereinrichtung erfolgt. Die erfindungsgemäße Vorrichtung weist weiterhin eine Steuereinrichtung auf, welche bewirkt, daß diese Bewegungseinrichtung in vorgegebenen Zeitabständen tätig wird.

Als Energiespeicher findet vorzugsweise eine Feder Verwendung, die vorzugsweise mit einem Kolben zusammenwirkt. Durch den Kolben läßt sich ein exakt vorgegebenes Fördervolumen fördern und damit eine exakte Dosierung erreichen.

Der Förderkolben wirkt vorzugsweise mit einem Endanschlag zusammen, durch den das Fördervolumen begrenzt wird. Dieser Endanschlag ist vorzugsweise veränderbar, so daß das Fördervolumen an die jeweilige Verbrauchsstelle angepaßt werden kann.

Diese Ausführungsform hat besondere Vorteile, da damit eine Vorrichtung zur Verfügung steht, welche weitgehend unabhängig von der Beschaffung der zu fördernden Substanz und unabhängig von den Umgebungsbedingungen die Einstellung eines bestimmten gewünschten Fördervolumens pro Zeiteinheit ermöglicht.

Die Begrenzung durch den Endanschlag hat den Vorteil, daß der Endanschlag in einem separaten Teil der Vorrichtung untergebracht werden kann. Erfindungsgemäß ist dieses Teil unmittelbar mit der Verbrauchsstelle verbunden, also beispielsweise in die Schmiernippelbohrung der Schmierstelle eingeschraubt. Bei einem Auswechseln des Fettvorrats bleibt dieses Teil mit dem Endanschlag an der Maschine, so daß das zugeführte Schmiermittelvolumen durch das Auswechseln nicht verändert werden kann. Den Anwendern werden Endanschläge zur Verfügung gestellt, die beispielsweise eine Zuführdauer von 100, 200, 300 und 400 Tage mit dem gegebenen Kammervolumen ermöglichen. Der Anwender schraubt dann das Teil mit dem für die jeweilige Verbrauchsstelle korrekt positionierten Endanschlag in die Zuführbohrung der Verbrauchsstelle ein. Damit ist sichergestellt, daß bei jedem Auswechseln oder Nachfüllen des Fettes an der entsprechenden Verbrauchsstelle die gleiche Schmiermittelmenge gefördert wird.

Die Steuerung des Fördervolumens pro Zeiteinheit kann auch durch eine Veränderung der Zeitabstände erfolgen, in denen die Förderung ausgelöst wird. In diesem Fall ist ebenfalls ein trennbares Teil vorgesehen, das an der Zuführstelle verbleibt und das ein Einstellelement aufweist, welches der Steuereinrichtung anzeigt, in welchen Zeitabständen eine Förderung erfolgen soll.

Diese Einrichtungen können auch kombiniert werden, so daß an dem trennbaren, an der Zuführstelle verbleibenden Teil ein Einstellelement vorgesehen ist, welches den Kolbenhub vorgibt und ein Indikatorelement, welches den Zeitabstand der Förderhübe anzeigt.

Fördereinrichtung und Bewegungseinrichtung sind so beschaffen, daß die Fördereinrichtung selbsttätig von dieser Position mit erhöhter Rückstellkraft in die Position mit niedriger Rückstellkraft zurückgeführt wird.

Die Verwendung eines solchen Energiespeichers hat den Vorteil, daß die in der Vorratskammer befindliche Substanz nur jeweils kurzfristig dem zum Fördern der Substanz erforderlichen Druck unterworfen wird. Wenn, wie bei einem später beschriebenen Ausführungsbeispiel, die Förderbewegung z.B. im festen Abstand von 12 Stunden ausgeführt wird, bedeutet dies, daß die Substanz täglich nur wenigen Sekunden oder Minuten diesem Druck unterworfen ist. Damit wird ein Entmischen von Schmierfett und dergleichen zuverlässig verhindert, wodurch einerseits die Sicherheit der Schmierung erhöht wird und es andererseits ermöglicht wird, auch gegen Entmischen empfindliche Substanzen in der Schmierung einzusetzen.

Die Rückstellkraft der Fördereinrichtung in der zweiten Position ist immer höher, als die zum Fördern erforderliche Kraft. Dies bewirkt, daß das Schmiermittel relativ schnell von der Vorratskammer zur Verbrauchsstelle zugeführt werden kann und macht den Fördervorgang von Umgebungseinflüssen unabhängig. Falls die Temperatur geringer und die Viskosität des Schmiermittels damit höher ist, ist zwar die durch die Federbelastung erzielbare Schergeschwindigkeit der Substanz vermindert. Dies bedeutet jedoch nur, daß das Fördern des jeweils vorgegebenen Volumens etwas länger dauert als bei höherer Temperatur, also z.B. drei Minuten statt zwei Minuten. Das pro Zeiteinheit zugeführte Schmiermittelvolumen ändert sich jedoch nicht. Das gleiche gilt, wenn die Temperatur gegenüber der üblichen Umgebungstemperatur erhöht ist und die Viskosität damit verringert ist. In diesem Fall verkürzt sich lediglich bei sonst gleichbleibendem Volumen die Förderzeit.

Da die zum Fördern erforderliche Kraft als elastische Rückstellkraft aufgebracht wird, kann die Bewegungseinrichtung, die die elastische Rückstellung bewirkt, verhältnismäßig klein und leicht dimensionsiert werden. Dies bedeutet eine wesentliche Kostenersparnis und eine Verringerung der Baugröße der Vorrichtung.

Als Bewegungseinrichtung findet vorzugsweise ein Elektromotor Verwendung, der durch eine Einweg-Batterie oder einen Akkumulator angetrieben wird. Durch eine spezielle Kupplungseinrichtung kann bewirkt werden, daß die erforderliche Vorspannung des Energiespeichers nur eine geringe Motorkraft erfordert.

Die Vorrichtung kann mit einem durchsichtigem Gehäuse oder durchsichtigen Gehäuseteilen ausgestattet werden. Dadurch ist eine einfache visuelle Inspektion des Schmiermittelvorrats und der Funktion möglich.

Zusätzlich kann eine Schalteinrichtung vorgesehen werden, um zu Inspektionszwecken die Ausführung eines Förderhubes zu bewirken. Damit ist eine Funktionsüberprüfung unabhängig von den jeweils eingestellten Förderintervallen möglich.

Weitere Vorteile, Merkmale und Anwendungsmöglichkeiten der vorliegenden Erfindung ergeben sich aus der nachfolgenden Beschreibung von Ausführungsbeispielen im Zusammenhang mit der Zeichnung. Darin zeigen:
- Fig. 1: ein Ausführungsbeispiel der erfindungsgemäßen Vorrichtung in einer senkrechten Schnittdarstellung, entsprechend den Schnittlinien I-I in Fig. 3;
- Fig. 2: eine Seitenansicht des Ausführungsbeispiels gemäß Fig. 1 in Richtung des Pfeiles II-II in Fig. 3 gesehen, wobei das äußere Gehäuse hier teilweise weggebrochen ist;
- Fig. 3: eine Horizontalschnittdarstellung entlang der Linie III-III in Fig. 1;
- Fig. 4: ein Blockschaltbild des Ausführungsbeispiels gemäß Fig. 1;
- Fig. 5: eine geschnittene Teildarstellung eines weiteren Ausführungsbeispiels der erfindungsgemäßen Vorrichtung;
- Fig. 6: eine geschnittene Teildarstellung eines weiteren Ausführungsbeispiels der erfindungsgemäßen Vorrichtung;
- Fig. 7: eine geschnittene Teildarstellung eines weiteren Ausführungsbeispiels der erfindungsgemäßen Vorrichtung;
- Fig. 8: eine Aufsicht auf den Hebel, wie er im Ausführungsbeispiel gemäß Fig. 7 verwendet wird;
- Fig. 9: eine geschnittene Teildarstellung eines weiteren Ausführungsbeispiels der erfindungsgemäßen Vorrichtung;
- Fig. 10: eine geschnittene Teildarstellung eines weiteren Ausführungsbeispiels der erfindungsgemäßen Vorrichtung; und
- Fig. 11: die Seitenansicht eines Fettbehälters, der zur Verwendung mit dem Ausführungsbeispiel gemäß Fig. 1 vorgesehen ist.

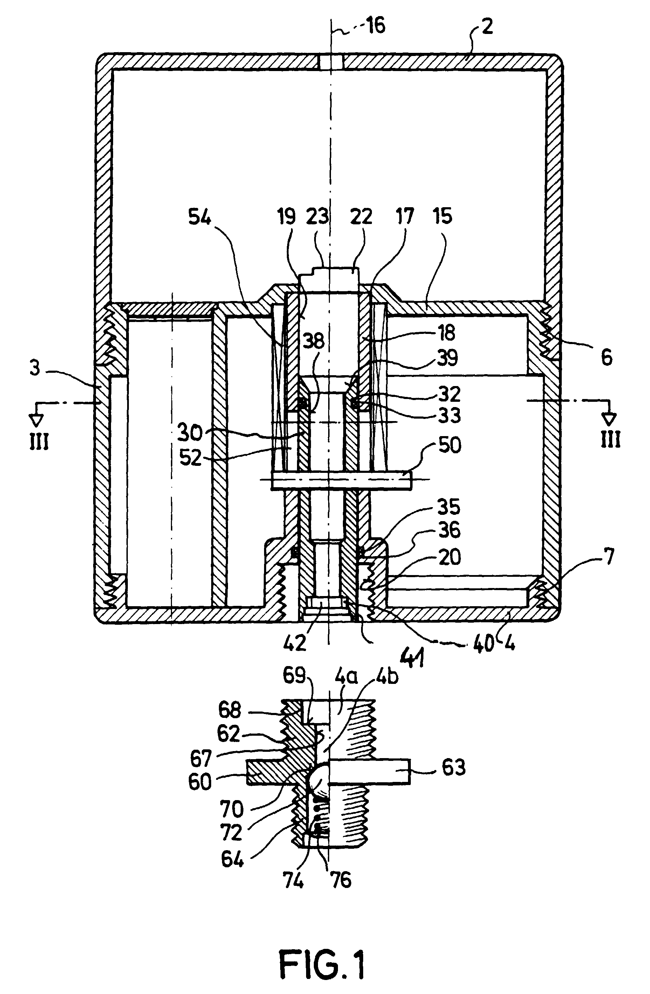

Ein erstes Ausführungsbeispiel der Erfindung wird nun in bezug auf die Fig. 1 bis 4 beschrieben.

Bei diesem und auch bei den anderen Ausführungsbeispielen handelt es sich um eine Vorrichtung zum Zuführen von Fett zu einer Schmierstelle, bei welcher die Dosierung des zuzuführenden Schmiermittels durch eine entsprechende Einrichtung verändert werden kann.

Die in den Figuren 1 bis 3 dargestellte Schmiervorrichtung 1 weist ein im wesentlichen zylindrisch gestaltetes Gehäuse auf, welches aus einem Deckelteil 2, einem Basisteil 3 und einem Unterteil 4 besteht. Das Gehäuse ist insgesamt aus Kunststoff und, bevorzugt, aus transparentem Kunststoff gefertigt. Das Deckelteil und das Unterteil sind jeweils mit dem Basisteil durch ein Gewinde 6 bzw. 7 verschraubt.

Das Deckelteil 2 weist einen zylindrischen Hohlraum 8 auf, in welchem ein aus Kunststoff bestehender Beutel 10 angeordnet ist, in dem das zu dosierende Fett enthalten ist. Der Beutel besteht vorzugsweise aus einem Polyethylen niederer Dichte.

Der Beutel kann im geschlossenen Zustand vom Schmierstofflieferanten erworben werden. Stattdessen ist es aber auch möglich, daß vor Ort, d.h. beim Schmierstoffanwender, entsprechend gestaltete Kunststoffbeutel mit dem Schmierfett gefüllt und dann in das Deckelteil 2 eingelegt werden.

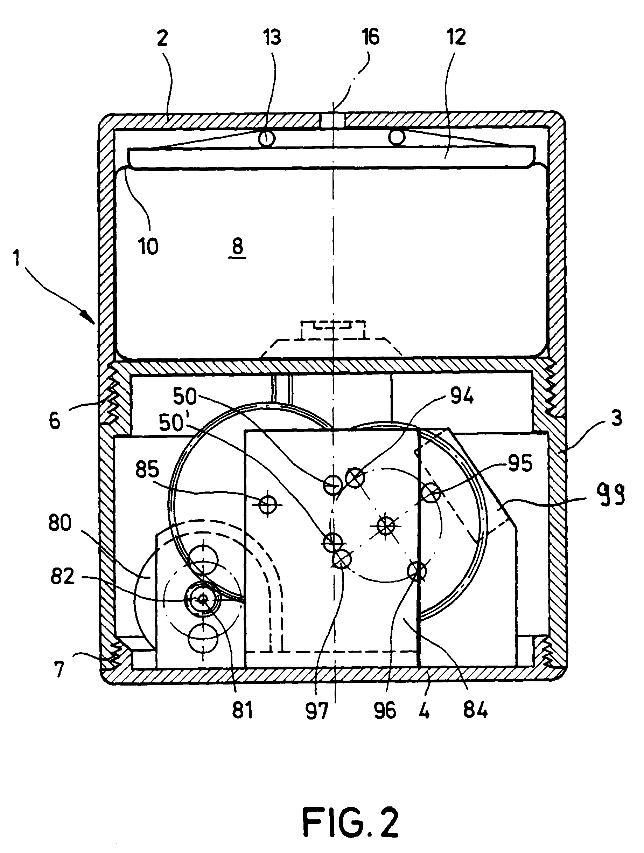

Oberhalb des Beutels 10 in Fig. 2 ist eine Platte 12 dargestellt, welche über eine konische Feder 13 auf den Beutel 10 gepreßt wird, um dort eine gewisse Vorspannung zu erzielen. Die Vorspannung der Feder 13 ist jedoch so bemessen, daß durch die Feder nur ein geringer Druck, vorzugsweise etwa 0,5 bar, auf das im Beutel 10 befindliche Fett ausgeübt wird.

Das Basisteil 3 ist, wie das Deckelteil 2, um eine Zylinderachse 16 herum im wesentlichen rotationssymmetrisch aufgebaut und durch eine obere kreisförmige Platte 15 zum Deckelteil 2 hin abgeschlossen, wobei die Platte 15 eine mehrfach gestufte Öffnung 17 aufweist. In diese Öffnung 17 greift ein mit dem Unterteil 4 einstückig verbundenes zylindrisches Rohrstück 18 ein, welches ebenfalls rotationssymmetrisch um die Zylinderachse 16 aufgebaut ist und eine zylindrische Innenfläche 19 aufweist. Im unteren Bereich des Basisteiles 3 erweitert sich die zylindrische Innenfläche 19 zu einer mit einem Innengewinde versehenen zylindrischen Ausnehmung 20.

Im oberen Teil der Öffnung 17 ist ein Ring 22 eingeschraubt bzw. eingeklebt, der nach oben eine scharfe abgesetzte Kante 23 aufweist. Dieser Ring dient dazu, den Kunststoffbeutel 10 mit dem Fettvorrat beim Aufschrauben des Deckelteils auf das Basisteil zu durchtrennen.

In der zylindrischen Innenfläche 19 des zylindrischen Rohrstückes 18 ist ein hohler zylindrischer Kolben 30 beweglich geführt. Der Kolben 30 weist eine erste ringförmige Ausnehmung 32 in seinem oberen Bereich auf, in dem ein Dichtring 33 eingesetzt ist, sowie in seinem unteren Bereich eine zweite zylindrische ringförmige Ausnehmung 35, in die ein Dichtring 36 eingesetzt ist. Durch die Dichtringe 33 und 36 wird der Kolben gegenüber der zylindrischen Innenfläche 19 des Rohrstückes 18 abgedichtet. Der Kolben 30 weist eine durchgehende Innenbohrung 38 auf, die sich zum Deckelteil 2 hin durch eine konische Ausnehmung 39 erweitert. Im unteren Bereich des Kolbens ist die Öffnung 38 durch eine erste zylindrische Ausnehmung 40 und diese wiederum durch eine zweite zylindrische Ausnehmung 41 erweitert. In der ersten zylindrischen Ausnehmung 40 ist eine aus Gummi oder Kunststoff bestehende zylindrische Dichtungsplatte 42 vorgesehen, die durch eine (nicht dargestellte) Feder gegen die obere Fläche der ersten zylindrischen Ausnehmung gedrückt wird.

Im Kolben 30 ist eine querverlaufende Bohrung vorhanden, in die ein zylindrischer Stift 50, beispielsweise durch Kleben, befestigt ist. Die zylindrische Achse des Stiftes 50 ist im Winkel von 90° zur zylindrischen Achse 16 angeordnet.

Das zylindrische Rohrstück 18 weist eine in der Zeichenebene der Fig. 1 verlaufende Ausnehmung 52 auf, die so angeordnet ist, daß sich der Kolben 30 mit dem Stift 50 innerhalb der zylindrischen Innenfläche 19 nach oben und nach unten bewegen kann.

Zwischen der Platte 15 des Basisteils 3 und dem Stift 50 ist eine Feder 54 angeordnet, deren oberes Ende in einer Stufe der Öffnung 17 geführt ist.

In der Darstellung gemäß Fig. 1 ist ein Anschlagbegrenzer 60 getrennt vom Basisteil 3 gezeichnet. Der Anschlagbegrenzer 60 weist einen ersten Einschraubstutzen 62 auf, der mit einem Außengewinde versehen und so bemessen ist, daß er in die Ausnehmung 20 eingeschraubt werden kann. Das Einschrauben wird durch einen Außensechskant 63 erleichtert, der sich an den ersten Einschraubstutzen 62 anschließt. Auf der dem ersten Einschraubstutzen 62 abgewandten Seite des Außensechskantes 63 ist ein zweiter Einschraubstutzen 64 vorgesehen, dessen Abmessungen derart gewählt sind, daß dieser Einschraubstutzen in die Bohrungen von Maschinen eingeschraubt werden kann, die zur Aufnahme von Schmiernippeln dienen.

Der Anschlagbegrenzer 60 weist eine durchgehende Bohrung 67 auf, die mit einer im ersten Einschraubstutzen angeordneten zylindrischen Erweiterung 68 versehen ist, deren Durchmesser zumindest geringfügig größer ist, als der Außendurchmesser des Kolbens 30. Durch die zylindrische Ausnehmung 68 wird eine Anschlagschulter 69 gebildet.

Etwa im Bereich des Außensechskantes 63 weist die Bohrung 67 eine sich nach unten öffnende konische Erweiterung 70 auf, in der eine Stahlkugel 72 aufgenommen ist. Die Stahlkugel 72 wird durch eine Feder 74 in die konische Erweiterung 70 gepreßt, wobei sich diese Feder 74 an einem eingeschraubten Ring 76 abstützt. Konische Ausnehmung 70, Kugel 72 und Feder 74 bilden ein Kugelventil.

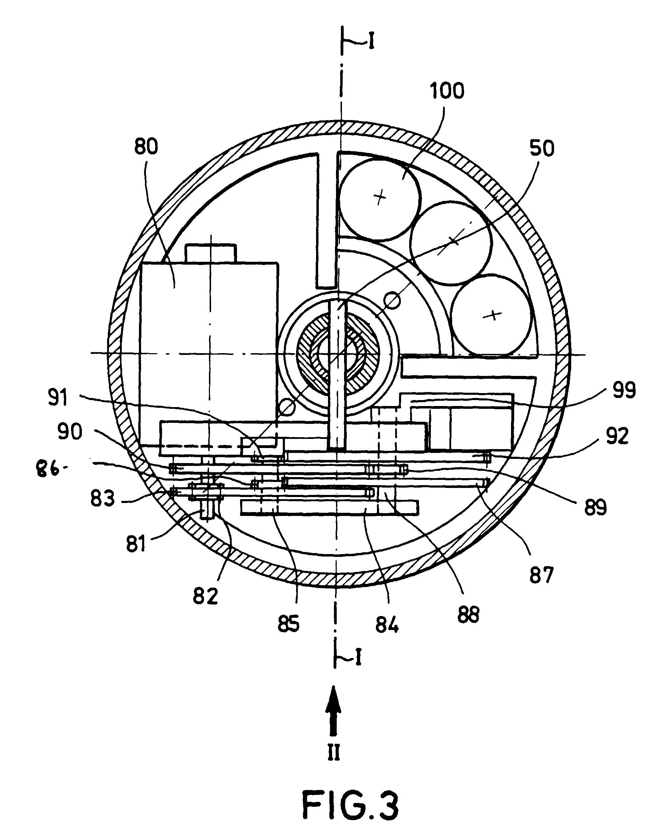

Wie nur in der Darstellung gemäß Fig. 2 und 3 gezeigt ist, ist im Basisteil 3 ein Elektromotor 80 angeordnet, dessen Antriebswelle 81 parallel zur Zylinderachse des Stiftes 50 angeordnet ist.

Auf der Motorwelle 81 ist ein Antriebsritzel 82 befestigt, welches mit einem ersten Zahnrad 83 kämmt, das an einer von einem Träger 84 gehaltenen Achse 85 gelagert ist. Konzentrisch zum ersten Zahnrad 83 ist drehfest mit diesem verbunden ein zweites Ritzel 86 angeordnet, dessen Drehbewegung auf ein zweites Zahnrad 87 übertragen wird, das an einer Welle 88 gelagert ist, die ebenfalls im Träger 84 gehalten ist. Konzentrisch zum Zahnrad 87 und mit diesem drehfest verbunden, ist ein drittes Ritzel 89 auf der Welle 88 angeordnet, welches ein drittes Zahnrad 90 antreibt, dessen Drehbewegung wiederum über ein zu diesem konzentrisches viertes Ritzel 91 auf ein viertes Zahnrad 92 übertragen wird, das ebenfalls drehbar um die Achse 88 gelagert ist.

In diesem vierten Zahnrad 92 sind, wie insbesondere in der Darstellung gemäß Fig. 2 zu erkennen ist, vier zylindrische Stößelstifte 94, 95, 96, 97 befestigt, deren Außendurchmesser in etwa gleich dem Außendurchmesser des zylindrischen Stiftes 50 ist. Die Stößelstifte liegen auf einem Kreis um die Drehachse des Zahnrades 92 und haben jeweils einen Winkelabstand von 90°. Der Stift 50, die Zahnräder und Ritzel sowie die Stößelstifte 94 bis 97 bestehen vorzugsweise aus Metall, besonders bevorzugt aus Stahl.

Parallel zur Drehebene des Zahnrades 92 und durch die Stößelstifte 94 bis 97 betätigbar ist ein elektrischer Endschalter 99 vorgesehen.

In einem Hohlraum des Basisteils 3 sind drei Batterien 100 angeordnet, die u.a. die Energie zum Betrieb des Motors 80 liefern.

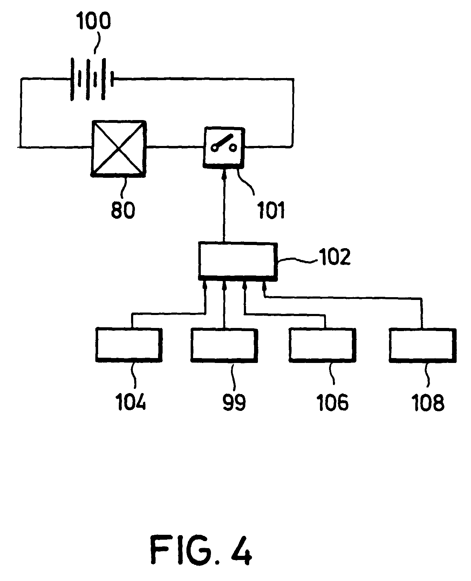

Die Vorrichtung wird über eine in Fig. 4 lediglich schematisch dargestellte elektrische Schalteinrichtung gesteuert. Die Spannung der Batterien 100 wird über ein Schaltrelais 101 dem Motor 80 zugeführt. Eine Steuereinrichtung 102 empfängt Signale eines Zeitgeberbausteins 104, des Endschalters 99 und eines von Hand betätigten Kontaktschalters 106, der (nicht dargestellt) vorzugsweise am Basisteil 3 befestigt und von außen betätigbar ist, und eines Sicherungsschalters 108, der ebenfalls (nicht dargestellt) am Unterteil 4 befestigt und eingeschaltet ist, wenn der Anschlagbegrenzer 60 in die Ausnehmung 20 eingeschraubt ist.

Im folgenden wird nun die Funktion des Ausführungsbeispiels erläutert:

Die in den Figuren dargestellte Schmiervorrichtung ist dafür vorgesehen, einen Beutel 10 mit 150 ml Schmierfett aufzunehmen. Selbstverständlich kann die Schmiervorrichtung auch mit größeren und kleineren Volumina ausgeführt werden. Ausgehend von der zur Verfügung stehenden Menge von 150 ml wird der Anschlagbegrenzer 60 derart ausgewählt, daß bei (im Ausführungsbeispiel) zwei Schmierhüben pro Tag der Schmierstelle täglich das gewünschte Fettvolumen zugeführt wird.

Der ausgewählte Anschlagbegrenzer 60 wird mit seinem zweiten Einschraubstutzen 64 in die entsprechende Schmiermittel-Zuführbohrung des entsprechenden Maschinenteils eingeschraubt. Anschließend wird auf den ersten Einschraubstutzen 62 des Anschlagbegrenzers 60 das Basisteil 3 mit dem Unterteil 4 aufgeschraubt. Ein neuer oder wiederbefüllter Beutel 10 mit dem Schmierfett wird auf die Platte 15 des Basisteils 3 aufgelegt und das Deckelteil 2 aufgeschraubt. Dabei durchdringt der Stanzring 22 den Beutel 10, so daß der Beutel zur Innenbohrung 19 des zylindrischen Rohrstükkes und zur Innenbohrung 38 des Kolbens 30 geöffnet ist.

Bei jedem Schmierstoffwechsel werden weiterhin die Batterien 100 durch neue Batterien bzw. entsprechende Akkumulatoren durch frischgeladene Akkumulatoren ersetzt. Durch das Einschrauben des Anschlagbegrenzers wird der Sicherungsschalter 108 aktiviert.

Der Zeitgeberbaustein 104 ist so bemessen, daß er exakt alle 12 Stunden einen Impuls an die Steuereinrichtung 102 gibt, und diese veranlaßt, durch das Schaltrelais 101 den Stromkreis zu schließen und dem Motor 80 Energie zuzuführen. Der Motor 80 wird dadurch in Drehung versetzt und treibt über das Untersetzungsgetriebe, das aus erstem, zweitem, drittem und viertem Ritzel, sowie aus dem ersten, zweiten und dritten Zahnrad besteht, das vierte Zahnrad 92 an. Das vierte Zahnrad 92 dreht sich dadurch langsam in der Darstellung gemäß Fig. 2 im Uhrzeigersinn. Durch die Drehung des vierten Zahnrades 92 werden auch die daran befestigten Stößelstifte 94 bis 97 bewegt. Wie in Fig. 2 für den Stift 97 dargestellt ist, kommen die Stößelstifte dadurch in Kontakt mit dem im Kolben befestigten Stift 50. In Fig. 2 ist der Stift 50 zweimal eingezeichnet, und zwar mit 50' in seiner unteren und mit 50 in seiner oberen Endstellung. Durch den Kontakt mit dem Stößelstift wird der Stift 50 entlang der Zylinderachse 16 in vertikaler Richtung nach oben bewegt. Sobald der Stift 50 seine in Fig. 2 dargestellte obere Endlage erreicht hat, kommen Stößelstift und Stift 50 außer Eingriff, wie dies für den Stift 94 dargestellt ist. Gleichzeitig kommt ein weiterer Stift, in Fig. 2 der Stift 95, in Kontakt mit dem Endschalter 106, der einen Impuls an die Steuereinrichtung 102 ausgibt, wodurch die Stromzufuhr zum Motor unterbrochen und der gesamte Antriebsmechanismus stillgesetzt wird. Durch die Bewegung des Stiftes 50 nach oben wird die Feder 54 zusammengedrückt. Da das Innere des Kolbens 30 und des Rohres 18 durch die Wirkung der Feder 13 immer vollständig mit Fett gefüllt ist und in der Ausnehmung 68 ein hohes Vakuum entsteht, wird bei der Bewegung des Kolbens 30 nach oben in der Bohrung 19 Fett gefördert. Dies geschieht, indem sich die Ventilklappe 42 öffnet, wodurch Fett in die Ausnehmung 68 des Anschlagbegrenzers 60 strömt. Sobald der Kolben seine obere Endstellung erreicht hat, ist die Verdrängung des Fettes beendet und die Ventilklappe 42 schließt sich.

Durch die Wirkung der Feder 54, die als Energiespeicher dient, wird der Stift 50 mit dem Kolben 30 nun wiederum langsam in die Ausgangsposition nach unten gedrückt. Dabei wird das in der Ausnehmung 68 befindliche Fett nach unten verdrängt, wodurch sich das Kugelventil 72, 74 öffnet und das Fett in die Schmierbohrung des Maschinenteiles eingebracht wird. Der Kolben 30 bewegt sich durch die Rückstellkraft der Feder 54 solange nach unten, bis die untere Begrenzung des Kolbens auf der Schulter 69 in der Ausnehmung 68 aufliegt, die somit den Endanschlag für den Kolben bildet. In dieser Position verbleibt die Vorrichtung, bis durch den Zeitgeber 104 der nächste Zeitimpuls ausgelöst wird, wodurch der nächste Förderhub beginnt.

Da die durch die Feder 54 bewirkte Bewegung des Kolbens in beliebig langsamer Zeit erfolgen kann, ist das Fördervolumen nur vom jeweiligen Hub des Kolbens abhängig, nicht aber von der jeweiligen, z.B. durch Temperatureinflüsse veränderbaren Viskosität des Schmierfettes. Falls die Temperatur niedriger und damit die Viskosität des Schmierfettes höher ist, ist die Zeitdauer, die der Kolben benötigt, um wieder seine Ausgangsposition an der Schulter 69 zu erreichen, lediglich länger. Das Schmiervolumen wird auch nicht durch die Strömungswiderstände innerhalb des Maschinenteiles verändert, da die Feder 54 in jedem Fall stark genug dimensioniert wird, um das Fett mit der erforderlichen Kraft einzupressen. Als günstig hat sich eine Dimensionierung der Feder herausgestellt, die einen Anpreßdruck von ca. 20 bar ermöglicht.

Da der Elektromotor sehr stark untersetzt ist, reicht das durch den Motor aufgebrachte Moment in jedem Fall aus, um nicht nur die Feder 54 zusammenzudrücken, sondern um auch den Kolben, selbst bei niedrigen Temperaturen und damit höherer Viskosität von der Ausgangsposition in die Förderposition zu bringen. Dies wird auch dadurch erleichtert, daß die Strömungswege in der Vorrichtung kurz sind und geradlinig verlaufen, und daß die Strömungsquerschnitte relativ groß sind, so daß der Strömungswiderstand innerhalb der Vorrichtung relativ gering ist.

Da das Gehäuse insgesamt transparent gestaltet ist, kann der Fettvorrat und die Funktionserfüllung der Vorrichtung jederzeit von außen kontrolliert werden. Zusätzlich ist die Schalteinrichtung 106 vorgesehen, durch die ein Fördergang jederzeit manuell ausgelöst werden kann. Dies ermöglicht es einer Bedienungskraft, bei der Kontrolle der Vorrichtung einen Fördervorgang auszulösen, und den Förderhub durch die transparenten Wände des Gehäuses zu beobachten.

Einen besonderen Vorteil bringt die Wahl des einschraubbaren Anschlagbegrenzers 60. Die Länge der zylindrischen Ausnehmung 68 und damit die Lage der Anschlagschulter 69, die den Endanschlag bildet, wird so gewählt, daß das pro Förderhub ausgestoßene Volumen einem vorgegebenen Volumen entspricht. Wenn beispielsweise ein Fettvolumen von 150 ml im Beutel 10 mit 200 Förderhüben (100 Tage mit jeweils 2 Förderhüben im Abstand von 12 Stunden) herausgefördert werden soll, werden die zylindrische Ausnehmung 68 und die Anschlagschulter 69 so dimensioniert, daß das Förderhubvolumen jeweils 0,75 cm³ beträgt. Wird eine größere oder eine kleinere Fördermenge pro Hub gewünscht, wird die Länge der Ausnehmung 68 entsprechend verändert, so daß die Schulter 69 weiter unten angeordnet ist (für einen größeren Hub) oder weiter oben (für einen kleineren Hub) als im Ausführungsbeispiel dargestellt.

Beim Auswechseln der Schmiervorrichtung bleibt der Anschlagbegrenzer im Maschinenteil eingeschraubt und es wird lediglich ein neues Gehäuse mit der entsprechenden Ausrüstung auf den Anschlagbegrenzer aufgeschraubt. Dadurch kann bei einem Auswechseln der Schmiervorrichtung das einmal durch den Anschlagbegrenzer definierte Förderhubvolumen nicht verändert werden, so daß Einstellfehler einer Bedienungskraft ausgeschlossen sind.

Zusätzlich können die Anschlagbegrenzer entsprechend dem ihnen jeweils zugeordneten Fördervolumen unterschiedlich farbig markiert werden, so daß bereits mit einem Blick auf den Anschlagbegrenzer ersichtlich ist, welches Förderhubvolumen für die jeweilige Schmierstelle gewählt wurde, oder anders ausgedrückt, in wievielen Tagen der Fettvorrat der Schmierstelle zugeführt wird.

Von wesentlicher Bedeutung bei der Konstruktion der erfindungsgemäßen Vorrichtung ist, daß ein Endpunkt der Kolbenhubbewegung, der obere Totpunkt, immer gleich ist, während der untere Endpunkt, und damit das Kolbenhubvolumen, durch den Anschlagbegrenzer veränderbar ist. Damit ist eine genaue Dosierung des Fördervolumens möglich, ohne daß in die Konstruktion der Vorrichtung selbst eingegriffen werden muß. Der Antrieb des Kolbens durch das Zusammenwirken von Stift 50 und Stößelstiften 94 bis 97 ist innerhalb der konstruktiven Grenzen unabhängig von der Position des Endanschlages. Dies erlaubt eine einfache und sehr genaue Dosierung des Fördervolumens, die keine über die Wahl des geeigneten Anschlagbegrenzers hinausgehende Einstelltätigkeit erfordert.

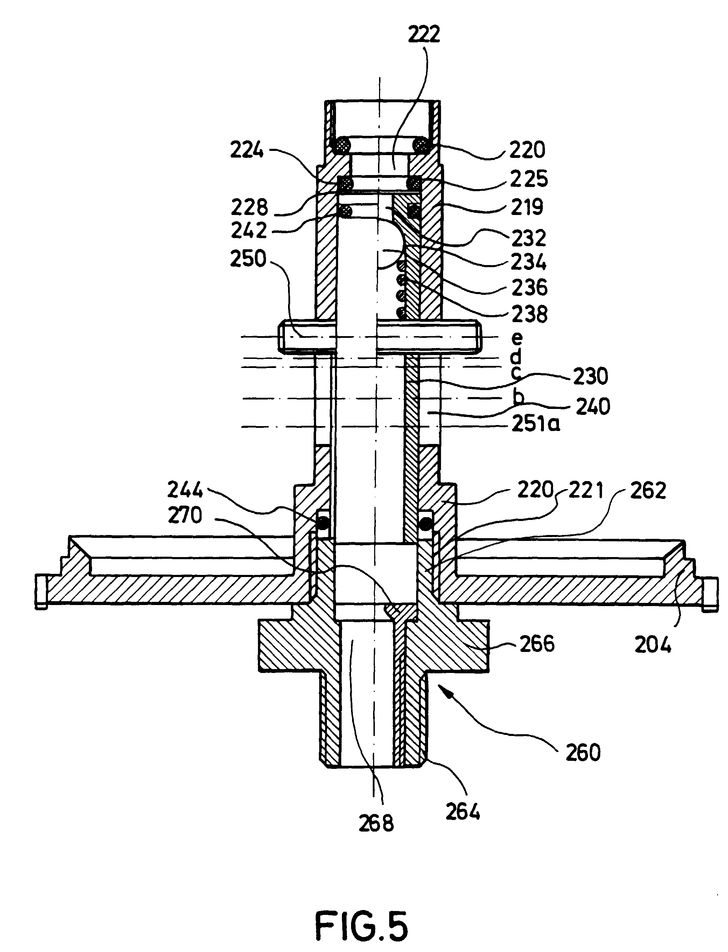

Eine alternative Ausführungsform der erfindungsgemäßen Vorrichtung wird nun in bezug auf die Fig. 5 beschrieben.

Bei dieser Ausführungsform sind der Deckel 2 und das Basisteil 3 sowie nicht näher beschriebene Teile in entsprechender Weise gestaltet, wie beim Ausführungsbeispiel gemäß den Fig. 1 bis 3.

In entsprechender Weise wie bei diesem Ausführungsbeispiel ist an das Unterteil 204 ein zylindrischer Ansatz 220 angeformt, in dem ein Innengewinde 221 vorgesehen ist.

An diesen zylindrischen Ansatz schließt sich ein Rohrstück 219 an, dessen oberer Teil entweder mit einem Behälter, wie er in Fig. 11 dargestellt ist, oder mit einem Behälter, wie er in Fig. 2 dargestellt ist, zusammenwirkt.

Beim gezeigten Beispiel ist das Einschrauben eines Behälters, wie er in Fig. 11 dargestellt ist, vorgesehen. Zum Abdichten des Behälters gegenüber dem Inneren des zylindrischen Rohrs 119 ist eine Dichtung 220 angeordnet.

Unterhalb dieser Dichtung 220 befindet sich eine erste ringförmige Anlagefläche 222, auf der die Dichtung 220 aufliegt, sowie eine zweite ringförmige Anlagefläche 224, auf der eine Dichtung 225 aufliegt. Unterhalb dieser Dichtung 225 ist eine Platte 228 in nicht näher dargestellter Weise geführt, die als Plattenventil wirkt.

Im zylindrischen Rohr 219 ist ein ebenfalls zylindrischer Kolben 230 verschieblich gelagert. Dieser Kolben weist in seinem oberen Bereich eine Durchgangsbohrung 232 auf, an welche sich eine kugelförmige Ausnehmung 234 anschließt. Diese kugelförmige Ausnehmung nimmt eine Kugel 236 auf, die im Zusammenwirken mit der Ausnehmung 234 und der Durchgangsbohrung 232 als Kugelventil wirkt.

Eine zylindrische Druckfeder 238 drückt die Kugel 236 gegen die kugelförmige Ausnehmung 234 und sperrt damit den Durchgang 232.

Die Feder 238 stützt sich auf einen zylindrischen Stift 250 ab, der in seiner Funktion dem Stift 50 in Fig. 1 entspricht. Dieser zylindrische Stift durchdringt den Kolben 230 und ist in einer Längsausnehmung 240 des zylindrischen Rohrs 219 verschieblich angeordnet.

Zur Abdichtung des Kolbens gegenüber dem zylindrischen Rohr dient im oberen Bereich ein O-Ring 242, der in einer entsprechenden Ausnehmung im Kolben eingelassen ist und im unteren Bereich ein O-Ring 244.

Zur Begrenzung des Kolbenhubs ist, analog zu Fig. 1, ein Hub- oder Anschlagbegrenzer 260 vorgesehen, der, bei dieser Darstellung, in das Unterteil 204 eingeschraubt ist. Dieser Anschlagbegrenzer 260 weist einen ersten zylindrischen Ansatz 262 auf, der in das Unterteil 204 eingeschraubt ist, sowie einen zweiten zylindrischen Ansatz 264, der in die übliche Schmierstoff-Zuführungsbohrung der Maschine eingeschraubt wird. Zum Einschrauben ist auch hier ein Sechskant 266 vorgesehen.

Der Anschlagbegrenzer weist einen durchgehenden Hohlraum 268 auf, durch welchen das Schmiermittel zur Schmierstelle gefördert werden kann. Zur Begrenzung des Hubes des Kolbens ist ein ringförmiger Anschlag 270 vorgesehen.

Die Funktion dieses Ausführungsbeispiels ist wie folgt:

Der (nicht dargestellte) Deckelteil (Fettbehälter) ist mit dem Inneren des Rohres 219 in Strömungsverbindung. Das Fett wird durch eine mit geringer Kraft wirkenden Vorspannfeder in Richtung auf das Rohr 219 gedrückt. Der Stift 250 wird in entsprechender Weise durch den Motor und das Getriebe nach oben gehoben, wie dies in bezug auf das Ausführungsbeispiel gemäß Fig. 1 bis 3 erläutert wurde. Dabei ist das Plattenventil 228 geschlossen. Der sich im Raum unterhalb des Plattenventils und in der Durchgangsbohrung 232 befindliche Schmierstoff übt einen Druck auf die Kugel 236 aus, durch welche diese nach unten gedrückt wird und ein Zwischenraum zwischen der kugelförmigen Ausnehmung 234 und der Kugel 236 öffnet. Dadurch kann das Fett in den Kolben fließen.

Sobald der Kolben seinen oberen Totpunkt überschritten hat, schließt sich das Kugelventil und der Kolben wird, wie im Ausführungsbeispiel gemäß den Fig. 1 bis 3, durch die Vorspannfeder 54 in Richtung auf den Anschlagbegrenzer 260 gedrückt. Dabei wird das im Kolben befindliche Fett durch die Durchgangsbohrung 268 zur Schmierstelle gefördert.

Bei der nach unten gerichteten Bewegung entsteht im Bereich der Durchgangsbohrung 232 ein Vakuum, welches das Plattenventil 228 öffnet. Das weiter entstehende Vakuum bewirkt, unterstützt durch die im Deckel angeordnete Feder 13, daß das Fett in die entstandene Kammer fließt.

Der Kolben bewegt sich unter der Wirkung der Feder so weit nach unten, bis die vordere Kante des Kolbens an den Anschlag 270 anstößt.

Durch eine entsprechende Wahl des Anschlages können, wie durch unterschiedliche Mittellinien 251a, b, c, d, e gekennzeichnet, verschiedene Längen des Kolbenhubes eingestellt werden, wodurch sich auch die pro Kolbenhub geförderte Menge entsprechend verändert.

Wie beim vorher beschriebenen Ausführungsbeispiel können unterschiedliche Anschlagbegrenzer vorgesehen sein, die dann zu unterschiedlichen Hublängen des Kolbens führen. Da der Anschlagbegrenzer bei einem Wechsel der Schmiervorrichtung an der Maschine verbleibt, wird durch den Anschlag automatisch festgelegt, wieviel Schmierstoff pro Zeiteinheit der Schmierstelle zufließt.

Der Vorteil dieses Ausführungsbeispiels gegenüber dem Ausführungsbeispiel gemäß Fig. 1 ist, daß die zur Ansaugung des Fettes erforderliche Strecke minimiert wurde. Da das Fett nur durch eine sehr geringe Strecke strömen muß und in dieser Strömung zudem wenig behindert wird, und da andererseits durch die Abwärtsbewegung des Kolbens ein starkes Vakuum entsteht, ist es mit dieser Vorrichtung möglich, auch bei sehr geringen Umgebungstemperaturen noch genügend Fett in die sich über dem Kolben bildende Kammer zu fördern.

Im übrigen ist die Funktion dieses Ausführungsbeispiels wie in bezug auf die Fig. 1 bis 3 erläutert.

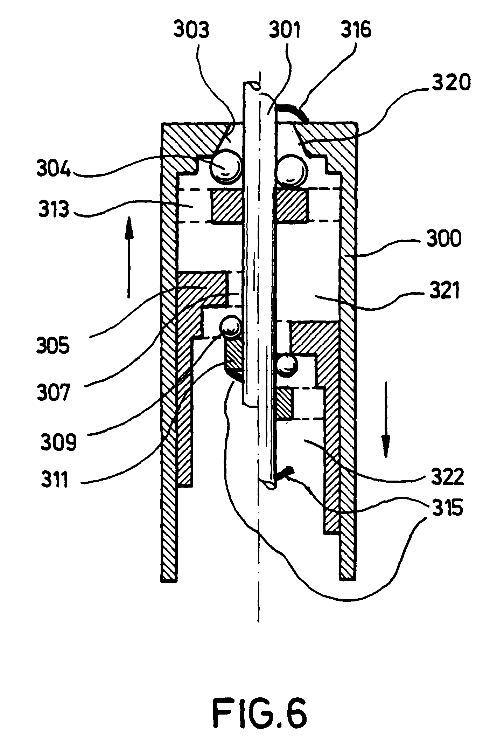

Ein weiteres Ausführungsbeispiel wird nun in bezug auf die Fig. 6 erläutert. Dieses Ausführungsbeispiel entspricht bis auf die Gestaltung des zylindrischen Rohres und des sich darin bewegenden Kolbens der Gestaltung der Ausführungsbeispiele gemäß den Fig. 1 bis 3 und 5.

Innerhalb des zylindrischen Rohrs 300 wird eine aus Stahl oder Kunststoff bestehende zylindrische Steuerstange 301 beweglich geführt. Das zylindrische Rohr 300 weist in seinem oberen Bereich eine sich zur Rohrmitte hin konisch erweiternde Bohrung 303 auf, durch welche der Schmierstoff vom Behälter in das zylindrische Rohr 300 strömt. Die konische Wand dieser Bohrung dient gleichzeitig als Anschlag für einen Ventilring 304 mit kreisrundem Querschnitt.

Der Kolben 305 ist in der Darstellung gemäß Fig. 6 in zwei Stellungen gezeichnet, und zwar in der linken Hälfte während des Ansaughubes und in der rechten Hälfte während des Förderhubes.

Der Kolben weist eine Durchgangsbohrung 307 auf, deren Durchmesser größer ist, als der Durchmesser der Steuerstange 301. Diese Durchgangsbohrung 307 wird durch einen Ventilring 309 verschlossen, der sich einerseits an der Innenwand des Kolbens und andererseits an einem Ring 311 abstützt, der verschieblich an der Steuerstange 301 gelagert ist.

Ein zweiter Ring 313 ist im oberen Bereich des zylindrischen Rohres vorgesehen und ortsfest zu diesem, beispielsweise durch Stege oder dergleichen befestigt. Dieser Ring dient als Anschlag für den Ventilring 304.

An der Steuerstange ist weiterhin ein unterer Anschlag 315 und ein oberer Anschlag 316 angeordnet.

Die Funktion dieses Ausführungsbeispiels ist wie folgt:

Wie beim Ausführungsbeispiel gemäß Fig. 5 werden durch das Zusammenwirken von zylindrischem Rohr, Kolben und Ventilringen drei Kammern gebildet, und zwar eine erste Kammer 320, welche in Strömungsverbindung mit dem Inneren des Fettbehälters steht, eine zweite Kammer 321 sowie eine dritte Kammer 322.

Wenn der Kolben sich nach oben bewegt, wie dies in der linken Hälfte von Fig. 6 gezeichnet ist, hebt der Kolbenboden vom Ventilring 309 ab und es strömt Fett aus der Kammer 321 in die Kammer 322. Da die Bewegung des Kolbens nach oben durch den Motor bewirkt wird, ist genügend Antriebsmoment vorhanden, um die Viskosität des Schmierfettes zu überwinden.

Die Kammer 320 ist während der Hubbewegung durch den Ventilring 304 geschlossen, so daß kein Fett in den Behälter zurückströmen kann.

Sobald der Kolben den oberen Totpunkt erreicht hat, wird der elektrische Antrieb abgeschaltet und der Kolben durch die Feder nach unten gedrückt. Dabei schließt sich der Zwischenraum zwischen Ventilring 309 und Kolbenboden 305, so daß das Schmiermittel nach unten verdrängt und zur Schmierstelle gefördert wird. Durch die Bewegung des Kolbens nach unten entsteht in der Kammer 321 ein Unterdruck, der in Verbindung mit der Reibung der Steuerstange, die sich ebenfalls nach unten bewegt, bewirkt, daß sich der Ventilring 304 auf den Anschlag 313 hin zubewegt. Dadurch wird die Verbindung zur Kammer 320 geöffnet und es strömt Fett in die Kammer 321. Dieser Strömungsvorgang wird durch die Feder 13 im Deckel unterstützt.

Auch hier ergibt sich der Vorteil, daß die Ansaugwege zwischen Fettbehälter und der Kammer 320 minimiert sind, so daß sich auch bei tiefen Temperaturen ein einwandfreies Strömungsverhalten des Schmierfettes ergibt.

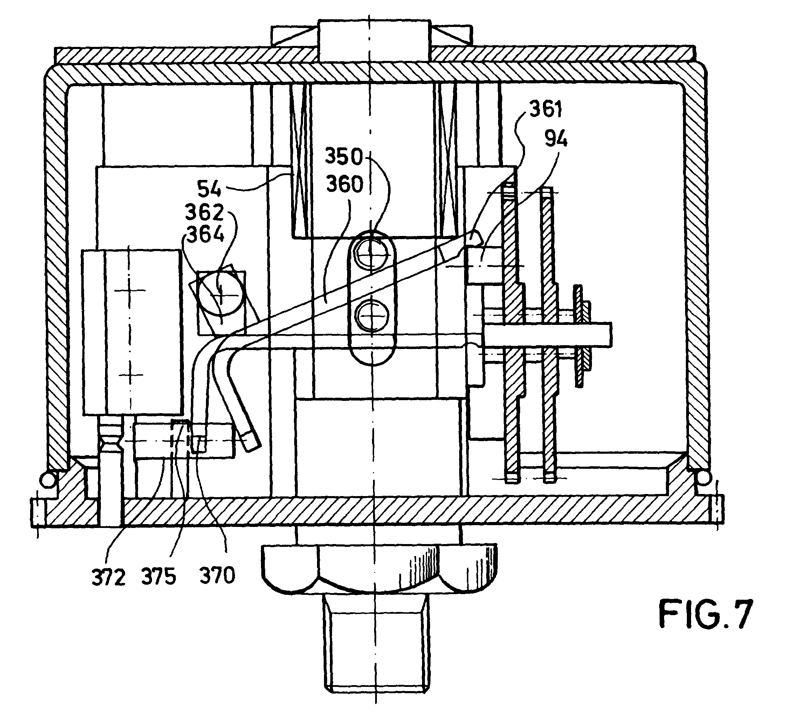

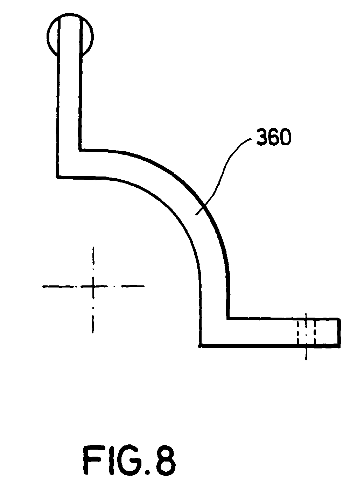

Ein weiteres Ausführungsbeispiel wird nun in bezug auf die Fig. 7 und 8 beschrieben.

Dieses Ausführungsbeispiel entspricht in seiner Gestaltung den bisher beschriebenen Ausführungsbeispielen. Unterschiedlich ist jedoch die Art, in welcher der Stift 350, der dem Querstift 50 bzw. 250 der vorstehend beschriebenen Ausführungsbeispiele entspricht, nach oben bewegt wird.

Bei diesem Ausführungsbeispiel sind, wie beim Ausführungsbeispiel gemäß Fig. 2, vier Stößelstifte 94 vorgesehen, welche durch das Getriebe in Umdrehung versetzt werden.

Im Unterschied zur Gestaltung der Fig. 2 wirkt hier jedoch der Stößel nicht unmittelbar auf den Stift 350. Es ist vielmehr ein Hebel 360 vorgesehen, der drehbar an einer Achse 362 gelagert ist. Die Verbindung des Hebels 360 mit der Achse 362 geschieht über eine Platte 364.

Im vorderen Bereich des Hebels, der mit dem Stößel 94 zusammenwirkt, ist eine Vertiefung 361 vorgesehen, welche den Eingriff mit dem Stößel 94 erleichtert.

Der Hebel 360 ist abgewinkelt und an seinem abgewinkelten Ende 370 über eine Zugfeder 372 mit einem stationären Teil verbunden. Wie sich aus der Darstellung gemäß Fig. 8 ergibt, ist der Hebel 360 bogenförmig gestaltet. Dies hat den Vorteil, daß der Hebel 360 um das zylindrische Rohr 19 bzw. 219 herumgeführt werden kann.

Wenn sich der Hebel in der unteren (in Fig. 7) Stellung befindet, drückt er auf einen Endschalter 375.

Die Funktion dieses Ausführungsbeispiels ist wie folgt:

Sobald die Steuereinrichtung den Motor (in Fig. 7, 8 nicht dargestellt) in Bewegung setzt, dreht sich das Zahnrad und der Stößel 94 bewegt sich auf einer Kreisbahn nach oben. Dabei kommt er in Kontakt mit dem waagerecht liegenden Hebel 360, wie dies im unteren Bereich der Fig. 7 dargestellt ist. Der Stößel hebt dann den Hebel 360 nach oben, wodurch gleichzeitig auch der Stift 350 nach oben gehoben wird. Dabei schwenkt der Hebel 350 um die Achse 362.

Nach einer gewissen Hubstrecke kommt der Hebel 360 außer Eingriff mit dem Stößel 94. Der Hebel fällt dann nach unten und wird durch die Zugfeder 372 gegen den Endschalter 375 gezogen. Dadurch wird der Steuereinrichtung ein Impuls zugeführt, der bewirkt, daß der Motor wieder abgeschaltet wird.

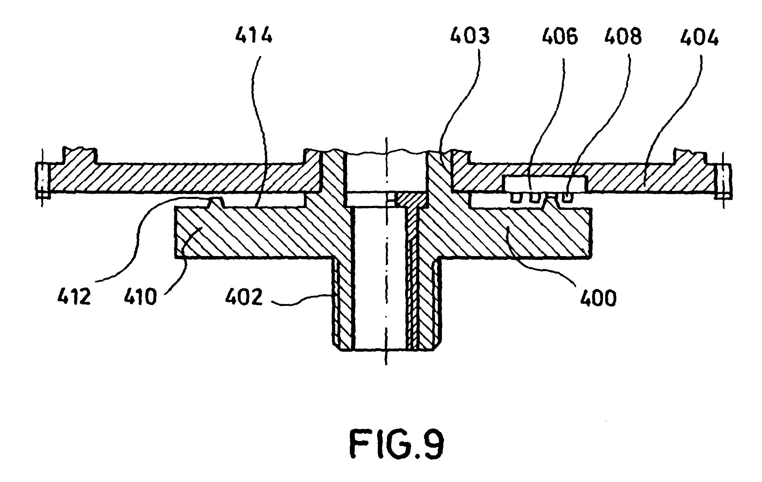

Ein weiteres Ausführungsbeispiel der Erfindung wird nun in bezug auf die Fig. 9 beschrieben.

Bei dieser Fig. 9 ist ein Verbindungsteil 400 gezeigt, wie es als Anschlagbegrenzer 60 in der Fig. 1 bzw. 260 in der Fig. 5 dargestellt ist. Das Verbindungsteil 400 weist einen zylindrischen Ansatz 402 mit einem Außengewinde auf, durch welchen das Verbindungsteil in eine Schmierstoffzuführbohrung in einem Maschinenteil eingeschraubt werden kann.

Das Verbindungsteil weist weiterhin einen (nur ansatzweise dargestellten) zweiten zylindrischen Ansatz 403 mit einem Außengewinde auf, durch welchen das Verbindungsteil in das Unterteil 404, welches dem Unterteil 204 in Fig. 5 und 4 in Fig. 1 entspricht, eingeschraubt werden kann. Im Unterschied zu den dort gezeigten Gestaltungen ist aber hier im Unterteil 404 eine Schalteinrichtung 406 vorgesehen, welche vier nebeneinander angeordnete Mikroschalter 408 aufweist.

Das Verbindungsteil weist eine ringförmige Platte 410 auf, auf welcher ein Ring 412 angeformt ist, der einen Vorsprung in bezug auf die ansonsten ebene Oberfläche 414 des Ringes 410 bildet.

Die Funktion dieses Ausführungsbeispiels ist wie folgt:

Das Verbindungsteil 400 wird in die Maschine eingeschraubt und anschließend wird ein Behälter mit einem Unterteil 404 auf das Verbindungsteil aufgeschraubt. Dabei betätigt der Ring 412 den (von innen gezählt) dritten Mikroschalter.

Die Steuereinrichtung, die ähnlich wie die Steuereinrichtung in Fig. 4 aufgebaut ist, fragt die Position der Schalteinrichtung 406 ab. Je nach Betätigung des Mikroschalters wird dann der zeitliche Abstand, in dem ein Hub des Kolbens ausgelöst wird, verändert.

Durch die Mikroschalter ergibt sich also die Möglichkeit einer Zeitsteuerung. So kann beispielsweise die Stellung der Mikroschalter 1 bis 4 einem, zwei, drei oder vier Förderhub(en) pro 24 Stunden entsprechen.

Da das Verbindungsteil 400 wie der Anschlagbegrenzer 60 und 260 an der Maschine verbleibt, wird bei jedem Aufsetzen eines neuen Behälters automatisch die korrekte Zeitsteuerung bewirkt.

Besonders vorteilhaft ist eine Kombination der Zeitsteuerung, wie sie in Fig. 9 dargestellt ist, mit einer Anschlagbegrenzung, wie sie in Fig. 1 und 5 erläutert wurde.

Verwendet man eine Schalteinrichtung mit drei Mikroschaltern, die ein, vier oder 16 Impulse pro Tag ausgibt, mit einem Kolben, dessen Hub in drei Stufen von 0,25 cm³ veränderbar ist, ergeben sich daraus folgende Kombinationsmöglichkeit:

| Förderhube/Tag | Hubvolumen in cm³ | Tagesvolumen in cm³ |
|---|---|---|
| 1 | 0,25 | 0,25 |
| 1 | 0,5 | 0,5 |
| 1 | 0,75 | 0,75 |
| 4 | 0,25 | 1 |
| 4 | 0,5 | 2 |
| 4 | 0,75 | 3 |
| 16 | 0,25 | 4 |
| 16 | 0,5 | 8 |
| 16 | 0,75 | 12 |

Man kann also mit diesen lediglich jeweils drei Variationen die Anforderungen an Schmierfett von einer geringen Fettversorgung bis zu einer hohen Fettversorgung problemlos erfüllen.

Da auch hier das Verbindungsteil an der Maschine verbleibt, ist beim Aufsetzen des Behälters automatisch das korrekte Fördervolumen eingestellt.

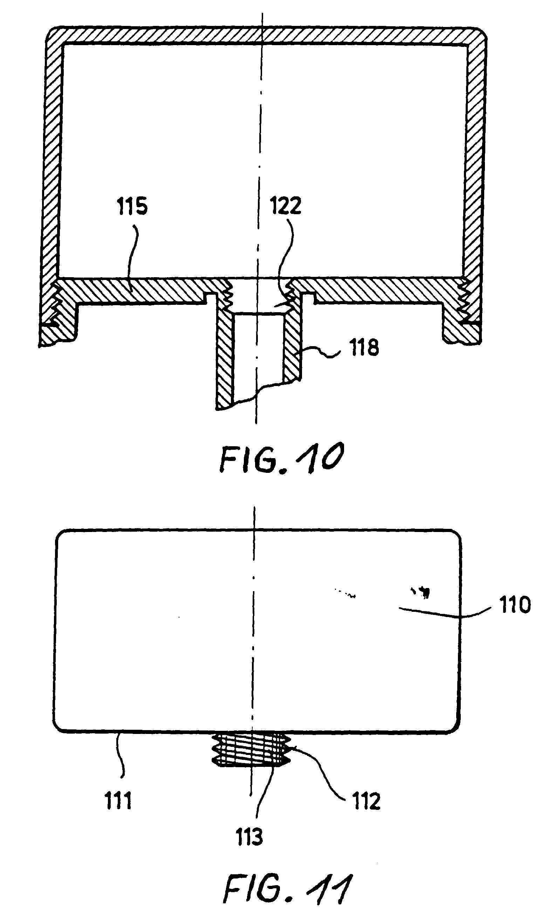

Eine Abwandlung des beschriebenen Ausführungsbeispiels hinsichtlich der Gestaltung des Fettbehälters wird nun in bezug auf die Fig. 10 und 11 beschrieben. Der Aufbau dieser Vorrichtung entspricht, bis auf die Gestaltung des Fettaufnahmeraumes und des Fettbehälters vollständig der Gestaltung gemäß den Fig. 1 bis 4. Im Unterschied zu der dort gezeigten Gestaltung ist hier jedoch beim zylindrischen Rohrstück 118 nicht ein Ring mit einer scharfen Kante 23 eingeschraubt oder aufgeklebt, sondern das Rohrstück 118 ist in seinem oberen Bereich mit einem Innengewinde 122 versehen.

Der Fettaufnahmebeutel 110, der in Fig. 11 dargestellt ist, besteht, wie der Beutel 10, aus Polyethylen, ist aber nicht vollständig geschlossen, sondern ist an seiner (in der Darstellung gemäß Fig. 11) Unterseite 111 mit einem zylindrischen Ansatz 112 versehen, welcher ein Außengewinde 113 aufweist.

Bei dieser Gestaltung wird der Beutel 110 mit dem Außengewinde 113 beim Fettwechsel in das Innengewinde 122 des rohrförmigen Stutzens 118 eingeschraubt. Diese Gestaltung hat den Vorteil, daß sie mit größerer Dichtigkeit ausgeführt werden kann, als die in bezug auf den Beutel 10 beschriebene Gestaltung. Die Dichtigkeit des Beutels gegenüber dem rohrförmigen Stutzen 118 kann auch erhöht werden, indem entsprechende Dichtringe und/oder Dichtkanten vorgesehen sind, wie sie dem Fachmann zur Abdichtung von geschraubten Rohrverbindungen bekannt sind.

Die Gestaltung erleichtert zudem den Transport des Fettbeutels 110, da der zylindrische Ansatz 112 während des Transportes durch eine einfache Schraubkappe verschlossen werden kann. Weiterhin erleichtert diese Gestaltung auch das Nachfüllen des Fettbehälters in einer mit einem entsprechenden Gewinde versehenen Nachfülleinrichtung.

Um das Ausbringen des Fettes zu erleichtern, kann die Unterseite 111 des Fettbehälters gegenüber den übrigen Teilen des Fettbehälters verstärkt werden.

Bei den gezeigten Ausführungsbeispielen erfolgt die Abschaltung des Motors bei jedem Förderhub durch einen Endschalter. Als Alternative zu diesem Endschalter kann auch ein als Schrittschaltmotor gestalteter Elektromotor verwendet werden, der sich nach jeder Impulsauslösung so lange dreht, bis sich das Zahnrad 92 und damit die Stößelstifte um exakt 90° weiter gedreht haben.

Statt des in den Ausführungsbeispielen dargestellten Antriebes mit vier Stößelstiften und dem Stift 50, 250, kann auch ein Kurbeltrieb verwirklicht werden, der den Kolben in seinen oberen Totpunkt führt. Ein solcher Kurbeltrieb kann z.B. verwirklicht werden, indem der Stift 50 verlängert wird und das Zahnrad 92 (und die entsprechenden Teile des Antriebes) so angeordnet werden, daß die Achse des Zahnrades senkrecht zur Achse des Stiftes 50 ist. Am Zahnrad 92 wird dann nur ein Stößelstift 94 befestigt, der sich in einer unteren, im Anschlagbegrenzer 60 zugewandten Position befindet, wenn der Kolben an der Schulter 69 anliegt. Wird das Zahnrad dann gedreht, kommt der Stößelstift 94 mit dem zylindrischen Stift 50 in Kontakt und hebt diesen, nach einer Drehung um insgesamt 180° in dessen oberen Totpunkt. Anschließend dreht sich das Zahnrad 92 in die gleiche Richtung um 180° weiter (oder auch in entgegengesetzter Richtung), so daß der Stift 94 wieder seine untere Anfangsstellung einnimmt. Die Stifte 95, 96 und 97 entfallen bei diesem Ausführungsbeispiel. In entsprechender Weise sind Ausführungen möglich, bei denen zwei um 180° oder drei um 120° versetzte Stößelstifte verwendet werden, und eine Drehung um 180° bzw. 120° ausgeführt wird.

Statt des vorstehend beschriebenen Kurbelantriebes ist auch die Verwendung eines üblichen Kurbelantriebes denkbar, bei welchem z.B. auf einem am Zahnrad 92 befestigten Kurbelzapfen eine drehbar zu diesem angeordnete Kurbel vorgesehen ist, die mit dem Kolben 30 zusammenwirkt.

Während z.B. die bekannten, durch Gasentladung angetriebenen Schmierbüchsen in der Regel als Einmalschmierbüchsen ausgeführt sind, die nach Entleerung weggeworfen werden, kann die erfindungsgemäße Schmiervorrichtung beliebig oft wiederverwendet werden. Dadurch werden unnötige Abfälle vermieden. Da der Antrieb in elektrischer Weise erfolgt, werden auch während des Betriebes keine Chemikalien freigesetzt.

## Patentansprüche

1. Vorrichtung zum dosierten Zuführen von flüssigen oder viskosen Substanzen zu einer Verbrauchsstelle, und insbesondere von Schmierstoffen zu einer Schmierstelle, mit
einer Vorratskammer (8) zur Aufnahme einer Menge der zuzuführenden Substanz;
einer Austrittsöffnung (70), durch die die in der Kammer befindliche Substanz der Verbrauchsstelle zugeführt werden kann;
einer Fördereinrichtung, welche ein Verdrängungselement (30; 230; 305) aufweist, welches durch die elastische Rückstellkraft eines verformbaren Energiespeichers (54) von einer ersten Position (OT) in eine zweite Position (UT) überführbar ist, wobei während des Überführens von dieser ersten (OT) in diese zweite Position (UT) die Substanz aus der Vorratskammer durch die Austrittsöffnung der Vebrauchsstelle zuführbar ist;
einer Bewegungseinrichtung (80, 82, 86, 87, 90, 91), durch welche dieses Verdrängungselement gegen die elastische Rückstellkraft dieses verformbaren Energiespeichers von dieser zweiten Position (UT) in diese erste Position (OT) überführbar ist;
einem Einstellelement(69; 270; 412), welches die Menge der der Verbrauchsstelle zuzuführenden Substanz beeinflußt; und
wenigstens zwei voneinander trennbaren Teilen, wobei das erste Teil (2, 3, 4) zumindest diese Vorratskammer (8) umfaßt und das zweite Teil (60; 260, 400) zumindest dieses Einstellelement (69; 270; 412);
dadurch gekennzeichnet,
daß eine Steuereinrichtung (102) vorgesehen ist, welche aufgrund der Signale eines Zeitgebers bewirkt, daß die Überführung des Verdrängungselementes von dieser zweiten (UT) in diese erste Position (OT) in einem vorbestimmten zeitlichen Abstand erfolgt, so daß pro Zeiteinheit eine vorbestimmte Menge der Substanz zu der Verbrauchsstelle gefördert wird
daß das zweite Teil weiterhin so gestaltet ist, daß es an der Verbrauchsstelle befestigbar ist.

2. Vorrichtung gemäß Anspruch 1, dadurch gekennzeichnet, daß dieses Einstellelement (412) den zeitlichen Abstand vorgibt, in dem die Steuereinrichtung (102) die Überführung des Verdrängungselementes (30; 230; 305) von der zweiten (UT) in die erste Position (OT) bewirkt.

3. Vorrichtung gemäß Anspruch 1 oder 2, dadurch gekennzeichnet, daß dieses Einstellelement (69, 270) vorgibt, welches Volumen bei der Betätigung des Verdrängungselementes (30; 230; 305) verdrängt wird.

4. Vorrichtung gemäß Anspruch 2 und 3, dadurch gekennzeichnet, daß ein erstes Einstellelement (412) den zeitlichen Abstand vorgibt, in dem die Steuereinrichtung die Überführung des Verdrängungselementes (30; 230; 305) von der zweiten (UT) in die erste Position (OT) bewirkt und ein zweites Einstellelement (69, 270) vorgibt, welches Volumen bei der Betätigung des Verdrängungselementes (30; 230; 305) verdrängbar ist.

5. Vorrichtung gemäß mindestens einem der Ansprüche 1 bis 4, dadurch gekennzeichnet, daß der Energiespeicher als Feder (54) ausgebildet ist.

6. Vorrichtung gemäß mindestens einem der vorhergehenden Ansprüche, dadurch gekennzeichnet, daß die Fördereinrichtung einen in einem Zylinder (19; 219; 300) geführten Kolben (30; 230; 305) aufweist, der beim Übergang von dieser ersten Position (OT) in diese zweite Position (UT) die Verringerung des Volumens in dem Zylinder und damit das Fördern der zuführenden Substanz bewirkt.

7. Vorrichtung gemäß Anspruch 6, dadurch gekennzeichnet, daß der Kolben (30; 230; 305) hohl ist.

8. Vorrichtung gemäß Anspruch 6 oder 7, dadurch gekennzeichnet, daß dieser Kolben (30; 230; 305) mit einem ein Einstellelement bildenden Endanschlag (69, 270) zusammenwirkt, welcher das bei jedem Kolbenhub verdrängte Volumen vorgibt.

9. Vorrichtung gemäß mindestens einem der vorhergehenden Ansprüche, dadurch gekennzeichnet, daß diese Bewegungseinrichtung zum Überführen des Verdrängungselements von der zweiten Position (UT) in die erste Position (OT) einen Elektromotor (80) aufweist, welcher über eine Bewegungs-Übertragungseinrichtung (50, 83, 86, 87, 89, 90, 92, 94, 95, 96, 97) mit diesem Energiespeicher verbunden ist.

10. Vorrichtung gemäß Anspruch 6 und 9, dadurch gekennzeichnet, daß an diesem Kolben (30, 230) ein Anschlagelement (50, 250) vorgesehen ist, welches mit der Bewegungs-Übertragungseinrichtung zusammenwirkt, und daß die Bewegungs-Übertragungseinrichtung weiterhin eine drehbare Scheibe (92) aufweist, welche zumindest ein Nockenelement (94, 95, 96, 97) aufweist, das mit diesem Anschlagelement (50) zusammenwirkt, um durch die Drehung der Scheibe diesen Kolben (30) von dieser zweiten (UT) in diese erste (OT) Position zu überführen.

11. Vorrichtung gemäß Anspruch 10, dadurch gekennzeichnet, daß an dieser Scheibe vier Nockenelemente (94, 95, 96, 97) vorgesehen sind, die im gleichen Winkelabstand zueinander an der Scheibe angeordnet sind, und daß die Scheibe jeweils um 90° gedreht wird, um den Kolben von dieser zweiten Position (UT) in diese erste Position (OT) zu überführen.

12. Vorrichtung gemäß Anspruch 10 oder 11, dadurch gekennzeichnet, daß dieses Anschlagelement (50, 250) und dieses Nockenelement (94, 95, 96, 97) so gestaltet sind, daß der Kolben (30, 230) unabhängig von der Lage, in welcher er diese zweite Position (UT) erreicht hat, in die erste Position (OT) überführt wird.

13. Vorrichtung gemäß mindestens einem der Ansprüche 9 bis 12, dadurch gekennzeichnet, daß die Bewegungs-Übertragungseinrichtung ein mehrstufiges Zahnradgetriebe aufweist, welches diesen Elektromotor (80) mit dieser Scheibe (92) verbindet.

14. Vorrichtung gemäß mindestens einem der Ansprüche 1 bis 13, dadurch gekennzeichnet, daß diese Vorratskammer (8) zur Aufnahme der zuzuführenden Substanz im wesentlichen zylindrisch gestaltet ist und einen im wesentlichen zylindrischen flexiblen Beutel (10, 110) aufweist, in welchem die zuzuführende Substanz aufgenommen ist.

15. Vorrichtung gemäß Anspruch 14, dadurch gekennzeichnet, daß der Beutel durch ein in die Vorratskammer ragendes, eine scharfe Kante (23) aufweisendes Rohrstück (22) mit dieser Fördereinrichtung verbunden ist.

16. Vorrichtung gemäß Anspruch 14, dadurch gekennzeichnet, daß die Verbindung des flexiblen Beutels (110) mit der Fördereinrichtung durch eine Verschraubung mit Gewinden (112, 122) erfolgt, welche am flexiblen Beutel und an der Fördereinrichtung angeordnet sind.

17. Vorrichtung gemäß Anspruch 2 oder 3, dadurch gekennzeichnet, daß das Einstellelement als Vorsprung (412) ausgebildet ist, welcher auf diesem zweiten Teil befestigt ist und daß dieses Einstellelement mit einer Schalteinrichtung zusammenwirkt, welche mit der Steuereinrichtung verbunden ist.

18. Verfahren zum dosierten Zuführen von Schmierstoff zu einer Schmierstelle, mit einer Vorrichtung gemäß einem der Ansprüche 1 bis 17 mit folgenden Verfahrensschritten:
Einschrauben dieses zweiten Teiles (60) in eine Gewindebohrung der zu versorgenden Schmierstelle;
Einbringen des zuzuführenden Schmierstoffes in die Vorratskammer (8) des ersten Teiles (2, 3, 4), und davor oder danach,
Zusammenfügen dieses ersten (2, 3, 4) und dieses zweiten Teiles (60);
Fördern des Schmierstoffes zur Schmierstelle indem dieses Verdrängungselement (30) in vorbestimmten zeitlichen Abständen durch diese Bewegungseinrichtung von dieser zweiten Position (UT) in diese erste Position (OT) und anschließend durch die Rückstellkraft dieses verformbaren Energiespeichers (54) von dieser ersten (OT) in diese zweite Position (UT) überführt wird, woduch ein vorbestimmtes Volumen dieses Schmierstoffes pro Zeiteinheit von diesem Verdrängungselement (30) zur Schmierstelle gefördert wird.

19. Verfahren gemäß Anspruch 18 dadurch gekennzeichnet, daß das Einbringen des Schmierstoffes erfolgt, indem ein flexibler, mit Schmierstoff gefüllter Beutel (10; 110) in die Vorratskammer eingelegt wird.

20. Verfahren gemäß Anspruch 19, dadurch gekennzeichnet, daß dieser flexible Beutel (10; 110) mit einer Feder (13) belastet wird, durch welche ein geringer Druck auf den im Beutel befindlichen Schmierstoff ausgeübt wird.

## Claims

1. A device for metered delivery of liquid or viscous substances to a consumption point, and in particular of lubricating substances to a lubrication point, comprising:
a container (8) for receiving an amount of the substance to be delivered;
an outlet (70), through which the substance, contained in the container, can be delivered to the consumption point;
a delivery means, which comprises a displacement element (30; 230; 305), which may be moved by the elastic return force of a deformable accumulator (54) from a first position (OT) into a second position (UT), said substance being deliverable from said container through said outlet to said consumption point during said movement from said first (OT) to that second position (UT);
a drive means (80, 82, 86, 87, 90, 91), by which said displacement element can be moved against said elastic return force of said deformable accumulator from said second position (UT) into said first position (OT);
an adjusting element (69; 270; 412) which influences the amount of the substance to be delivered to said consumption point; and
at least two parts which are separable from each other, said first part (2, 3, 4) comprising that container (8) and said second part (60; 62; 400) comprising at least said adjusting element (69; 270; 412);
**characterized in that**
a control means (102) is provided which effects said movement of said displacement element from said second (UT) to said first position (OT) based on the signals of a timer in a predetermined time interval such that a predetermined amount of said substance is delivered per time unit to said consumption point.

2. A device according to claim 1 characterized in said adjusting element (412) adjusts the time interval in which said control means (102) effects said movement of said displacement element (30; 230; 305) from said second (UT) into said first position (OT).

3. A device according to claim 1 or 2, characterized in that said adjusting element (69; 270) determines which volume is displaced upon actuation of said displacement element (30; 230; 305).

4. A device according to claim 2 or 3, characterized in that a first adjusting element (412) adjusts said time interval in which said control means effects said movement of said displacement element (30; 230; 305) from said second (UT) into said first position (OT), and in that a second adjusting element (69, 270) determines which volume is displaced upon actuation of said displacement element (30; 230; 305).

5. A device according to at least one of claims 1 to 4, characterized in that said accumulator is designed as a spring (54).

6. A device according to at least one of the preceding claims, characterized in that said delivery means comprises a piston (30; 230; 305) guided in a cylinder (19; 219; 300) which reduces the volume in the cylinder when moved from said first position (OT) into said second position (UT) and thereby effects the delivery of the substance to be delivered.

7. A device according to claim 6, characterized in that said piston (30; 230; 305) is hollow.

8. A device according to claim 6 or 7, characterized in that said piston (30; 230; 305) operates with a stop (69, 270) forming an adjusting element which defines the volume of substance which is displaced upon each piston stroke.

9. A device according to at least one of the preceding claims, characterized in that said drive means comprises an electric motor (80) for moving said displacement element from said second position (UT) into said first position (OT), said electric motor being connected by a motion transmitting means (50, 83, 86, 87, 89, 90, 92, 94, 95, 96, 97) with said accumulator.

10. A device according to claims 6 and 9, characterized in that said piston (30, 230) comprises a pushing element (50, 250) cooperating with said motion transmitting means and that said motion transmitting means further includes a rotatable disc (92) which has at least one cam element (94, 95, 96, 97) which cooperates with said pushing element (50), for displacing said piston from said second (UT) into said first (OT) position by rotating said disc.

11. A device according to claim 10, characterized in that said disc comprises four cam elements (94, 95, 96, 97) arranged at equal angular distance with respect to each other on said disc, and that said disc is rotated by 90° for moving said piston from said second position (UT) into said first position (OT).

12. A device according to claim 10 or 11, characterized in that said pushing element (50, 250) and said cam element (94, 95, 96, 97) are designed such that said piston (30, 230) is moved into said first position (OT), independent of said position in which it has reached said second position (UT).

13. A device according to at least one of claims 9 to 12, characterized in that said motion transmitting means comprises a multistage gear connecting said electric motor (80) with said disc (92).

14. A device according to at least one of claims 1 to 13, characterized in that said container (8) for receiving the substance to be delivered is designed substantially cylindrically and comprises a substantially cylindrical flexible sack (10,110) for receiving said substance.

15. A device according to claim 14, characterized in that said sack is connected by a tubular member, precluding into the container, said tubular member having a sharp edge (23), with said delivery device.

16. A device according to claim 14, characterized in that said connection of said flexible sack (110) with said delivery means is by means of a thread means (112, 122) provided on said flexible sack and on said delivery means.

17. A device according to claim 2 or 3, characterized in that said adjusting element is designed as projection (412) which is fixed on said second part and that said adjusting element cooperates with a circuit means connected to said control means.

18. A method for metered delivery of a lubricating substance to a lubrication point using a means according to one of claims 1 to 17, comprising the steps of:
- screwing said second part (60) into a threaded bore of said lubrication point to be delivered;
- inserting said lubricating substance to be delivered into said container (8) of said first part (2, 3, 4) and therebefore or thereafter;
- joining said first (2, 3, 4) and said second part (60);
- delivering said lubricating substance to said lubrication point by moving said displacement element (30) in predetermined time intervals by said drive means from said second position (UT) into said first position (OT) and thereafter by said return force of said deformable accumulator (54) from said first (OT) into said second position (UT), whereby a predetermined volume of said lubricating substance is delivered per time unit from said displacement element (30) to said lubrication point.

19. A method according to claim 18, characterized in that said inserting of said lubricating substance is arranged by inserting a flexible sack (10; 110) filled with said lubricating substance into said container.

20. A method according to claim 19, characterized in that said flexible sack (10; 110) is loaded with a spring (13) whereby a small pressure is imparted onto said lubricating substance contained in said sack.

## Revendications

1. Dispositif pour amener de façon dosée des substances liquides ou visqueuses à un point de consommation, en particulier des lubrifiants à un point de lubrification, comportant :
- une chambre de réserve (8) pour recevoir une quantité de la substance à amener,
- une ouverture de sortie (70) à travers laquelle la substance située dans la chambre peut être amenée au point de consommation,
- un dispositif d'amenée qui présente un élément de refoulement (30 ; 230 ; 305) susceptible d'être transféré par la force de rappel élastique d'un accumulateur d'énergie déformable (54) depuis une première position (OT) jusqu'à une seconde position (UT), et pendant le transfert depuis cette première position (OT) jusque dans cette seconde position (UT), la substance peut être amenée à travers l'ouverture de sortie jusqu'au point de consommation,
- un dispositif de déplacement (80, 82, 86, 87, 90, 91) par lequel cet élément de refoulement peut être transféré depuis cette seconde position (UT) jusque dans cette première position (OT) à l'encontre de la force de rappel élastique de cet accumulateur d'énergie déformable,
- un élément de réglage (69 ; 270 ; 412) qui influence la quantité de la substance à amener au point de consommation, et
- au moins deux parties séparables l'une de l'autre, la première partie (2, 3, 4) présentant au moins ladite chambre de réserve (8) et la seconde partie (60 ; 260 ; 400) présentant au moins ledit élément de réglage (69; 270 ; 412),
caractérisé en ce qu'il est prévu un dispositif de commande (102) qui fait, en raison des signaux d'un capteur temporel, que le transfert de l'élément de refoulement depuis cette seconde position (UT) jusque dans cette première position (OT) s'effectue à un intervalle temporel prédéterminé, de sorte qu'une quantité prédéterminée de la substance est amenée par unité de temps jusqu'au point de consommation, et que la seconde partie est en outre réalisée de telle sorte qu'elle peut être fixée au point de consommation.

2. Dispositif selon la revendication 1, caractérisé en ce que ledit élément de réglage (412) détermine l'intervalle temporel auquel le dispositif de commande (102) entraîne le transfert de l'élément de refoulement (30 ; 230 ; 305) depuis la seconde position (UT) jusque dans la première position (OT).

3. Dispositif selon l'une ou l'autre des revendication 1 et 2, caractérisé en ce que ledit élément de réglage (69, 270) détermine quel volume est refoulé lors de l'actionnement de l'élément de refoulement (30 ; 230 ; 305).

4. Dispositif selon les revendications 2 et 3, caractérisé en ce qu'un premier élément de réglage (412) détermine l'intervalle temporel auquel le dispositif de commande entraîne le transfert de l'élément de refoulement (30 ; 230 ; 305) depuis la seconde position (UT) jusque dans la première position (OT), et en ce qu'un second élément de réglage (69, 270) détermine quel volume peut être refoulé lors de l'actionnement de l'élément de refoulement (30 ; 230 ; 305).

5. Dispositif selon l'une quelconque au moins des revendications 1 à 4, caractérisé en ce que l'accumulateur d'énergie est réalisé sous forme d'un ressort (54).

6. Dispositif selon l'une quelconque au moins des revendications précédentes, caractérisé en ce que le dispositif d'amenée présente un piston (30 ; 230 ; 305) guidé dans un cylindre (19 ; 219 ; 300), qui entraîne la réduction du volume dans le cylindre et ainsi l'amenée de la substance à amener, lors du transfert depuis ladite première position (OT) jusque dans ladite seconde position (UT).

7. Dispositif selon la revendication 6, caractérisé en ce que le piston (30 ; 230 ; 305) est creux.

8. Dispositif selon l'une ou l'autre des revendications 6 et 7, caractérisé en ce que ledit piston (30 ; 230 ; 305) coopère avec une butée d'extrémité (69, 270) formant un élément de réglage, qui détermine le volume refoulé lors de chaque course du piston.

9. Dispositif selon l'une quelconque au moins des revendications précédentes, caractérisé en ce que ledit dispositif de déplacement pour transférer l'élément de refoulement depuis la seconde position (UT) jusque dans la première position (OT) présente un moteur électrique (80) qui est relié via un dispositif de transmission de mouvement (50, 83, 86, 87, 89, 90, 92, 94, 95, 96, 97) à cet accumulateur d'énergie.

10. Dispositif selon les revendications 6 et 9, caractérisé en ce qu'il est prévu sur ledit piston (30, 230) un élément de butée (50, 250) qui coopère avec le dispositif de transmission de mouvement, et en ce que le dispositif de transmission de mouvement présente en outre un disque tournant (92) qui présente au moins un élément à came (94, 95, 96, 97) qui coopère avec ledit élément de butée (50) afin de transférer ledit piston (30) depuis ladite seconde position (UT) jusque dans ladite première position (OT) par la rotation du disque.

11. Dispositif selon la revendication 10, caractérisé en ce qu'il est prévu sur ledit disque quatre éléments à came (94, 95, 96, 97) qui sont agencés à la même distance angulaire les uns par rapport aux autres sur le disque, et en ce que le disque est tourné respectivement de 90° afin de transférer le piston depuis ladite seconde position (UT) jusque dans ladite première position (OT).

12. Dispositif selon l'une ou l'autre des revendications 10 et 11, caractérisé en ce que ledit élément de butée (50, 250) et ledit élément à came (94, 95, 96, 97) sont réalisés de telle sorte que le piston (30, 230) est transféré jusque dans la première position (OT) indépendamment de la situation dans laquelle il a atteint ladite seconde position (UT).

13. Dispositif selon l'une quelconque au moins des revendications 9 à 12, caractérisé en ce que le dispositif de transmission de mouvement présente une transmission à roue dentée à plusieurs étages qui relie ledit moteur électrique (80) à ce disque (92).

14. Dispositif selon l'une quelconque au moins des revendications 1 à 13, caractérisé en ce que ladite chambre de réserve (8) pour recevoir la substance à amener est réalisée sensiblement en forme cylindrique et présente une poche flexible sensiblement cylindrique (10, 110) dans laquelle est reçue la substance à amener.

15. Dispositif selon la revendication 14, caractérisé en ce que la poche est reliée audit dispositif d'amenée par un tronçon tubulaire (22) pénétrant dans la chambre de réserve et présentant une arête vive (23).

16. Dispositif selon la revendication 14, caractérisé en ce que la liaison de la poche flexible (110) avec le dispositif d'amenée s'effectue par un élément de vissage présentant des pas de vis (112, 122) qui sont agencés sur la poche flexible et sur le dispositif d'amenée.

17. Dispositif selon l'une ou l'autre des revendications 2 et 3, caractérisé en ce que l'élément de réglage est réalisé sous forme d'une saillie (412) qui est fixée sur ladite seconde partie, et en ce que ledit élément de réglage coopère avec un dispositif de commutation qui est relié au dispositif de commande.

18. Procédé pour amener de façon dosée du lubrifiant à un point de lubrification avec un dispositif selon l'une quelconque des revendications 1 à 17, présentant des étapes suivantes :
- on visse ladite seconde partie (60) dans un perçage taraudé du point de lubrification à alimenter,
- on introduit le lubrifiant à amener dans la chambre de réserve (8) de la première partie (2, 3, 4), et, comme étape précédente ou successive
- on assemble cette première partie (2, 3, 4) et cette seconde partie (60),
- on amène le lubrifiant au point de lubrification en transférant ledit élément de refoulement (30) par ledit dispositif de déplacement à des intervalles temporels prédéterminés depuis ladite seconde position (UT) jusque dans ladite première position (OT), et on le transfère ensuite par la force de rappel dudit accumulateur d'énergie déformable (54) depuis ladite première position (OT) jusque dans ladite seconde position (UT), grâce à quoi un volume prédéterminé dudit lubrifiant est amené par unité de temps par ledit élément de refoulement (30) jusqu'au point de lubrification.

19. Procédé selon la revendication 18, caractérisé en ce que l'introduction du lubrifiant s'effectue en mettant en place dans la chambre de réserve une poche flexible (10 ; 110) remplie avec le lubrifiant.

20. Procédé selon la revendication 19, caractérisé en ce que ladite poche flexible (10 ; 110) est sollicitée par un ressort (13) par lequel une légère pression est exercée sur le lubrifiant situé dans la poche.
